# EUROPEAN PATENT SPECIFICATION

(11) **EP 4 050 915 B1**
(45) Date of publication and mention of the grant of the patent: **28.10.2026**
(21) Application number: 20888997.2
(22) Date of filing: 17.11.2020
(51) Int. Cl.: H04W 4/06, H04B 7/06, H04L 5/00, H04L 27/26

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 22.11.2019 CN 201911154613
(43) Date of publication of application: 31.08.2022
(73) Proprietor: Huawei Technologies Co., Ltd., Shenzhen, Guangdong 518129 (CN)
(72) Inventor: JIAO, Chunxu, Shenzhen, Guangdong 518129 (CN); GUO, Wenting, Shenzhen, Guangdong 518129 (CN); YUAN, Pu, Shenzhen, Guangdong 518129 (CN); LU, Lei, Shenzhen, Guangdong 518129 (CN)
(74) Representative: Isarpatent
(86) International application number: PCT/CN2020/129276
(87) International publication number: WO 2021/098669

(56) References cited:
- WO-A1-2018/031807
- WO-A1-2019/220005
- CN-A- 109 417 717
- CN-A- 110 224 802
- AT&T: "Remaining Issues in Multi TRP Transmission", vol. RAN WG1, no. Reno, USA; 20190513 - 20190517, 13 May 2019 (2019-05-13), XP051728614, Retrieved from the Internet <URL:http://www.3gpp.org/ftp/Meetings%5F3GPP%5FSYNC/RAN1/Docs/R1%2D1907171%2Ezip> [retrieved on 20190513]
- FRAUNHOFER IIS ET AL: "UE panel-specific UL transmission", vol. RAN WG1, no. Taipei, Taiwan; 20190121 - 20190125, 20 January 2019 (2019-01-20), XP051593273, Retrieved from the Internet <URL:http://www.3gpp.org/ftp/Meetings%5F3GPP%5FSYNC/RAN1/Docs/R1%2D1900359%2Ezip> [retrieved on 20190120]
- VIVO: "Further discussion on Multi-Beam Operation", vol. RAN WG1, no. Athens, Greece; 20190225 - 20190301, 16 February 2019 (2019-02-16), XP051599399, Retrieved from the Internet <URL:http://www.3gpp.org/ftp/tsg%5Fran/WG1%5FRL1/TSGR1%5F96/Docs/R1%2D1901703%2Ezip> [retrieved on 20190216]
- NOKIA, ALCATEL-LUCENT SHANGHAI BELL: "Dynamic TDD Interference Mitigation Concepts in NR", 3GPP DRAFT; R1-1703110_DYNAMIC TDD INTERFERENCE MITIGATION CONCEPTS IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20170213 - 20170217, 6 February 2017 (2017-02-06), Mobile Competence Centre ; 650, route des Lucioles ; F-06921 Sophia-Antipolis Cedex ; France, XP051220369

## Description

### TECHNICAL FIELD

This disclosure relates to communication technologies, and the invention in particular relatees to a communication method and apparatus.

### BACKGROUND

In the communication field, a transmit end usually communicates with a receive end through an antenna. To meet an increasingly high communication requirement of a user, a plurality of antennas are usually disposed in a transmit end and a receive end, and communication is performed through the plurality of antennas.

In a conventional technology, a communication process implemented based on a plurality of antennas is generally as follows: A transmit end selects one transmit antenna to transmit data, and a receive end selects one receive antenna to receive data. For example, a terminal device sends data to a base station, and a quantity of transmit antennas of the terminal device is 2. A process in which the terminal device selects a transmit antenna mainly includes two phases: uplink measurement and downlink control. In the uplink measurement phase, the terminal device sends sounding reference signals (sounding reference signals, SRSs) on different time-frequency resources by using different antennas. The base station separately estimates channel quality of the two antennas of the terminal device by using the received SRSs, and selects a transmit antenna of the terminal device with good channel quality. In a downlink control phase, the base station implicitly includes an antenna selection result in uplink scheduling control information sent to the terminal device. Then, the terminal device performs blind detection on the uplink scheduling control information, obtains the antenna selection result of the base station, and selects an appropriate transmit antenna based on the result.

However, as a quantity of antennas in the transmit end and the receive end continuously increases, especially when the transmit end and the receive end each use a panel that includes an antenna array including several antennas to perform communication, by using a method in the conventional technology, one time-frequency resource needs to be allocated to each antenna port on each panel to send an SRS, and resource overheads are high.

WO2018/031807 describes a configuration of antenna panel specific CSI-RS with a panel identifier, a scrambling initialization consideration, and precoding of the CSI-RS for reporting.

AT&T: "Remaining Issues in Multi TRP Transmission", 3GPP DRAFT; R1 -1907171 REMAINING ISSUES IN MULTI TRP TRANSMISSION, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRAN, vol. RAN WG1, no. Reno, USA; 20190513 - 20190517 13 May 2019 (2019-05-13), XP051728614 describes some details on multiple panel/TRP CSI-RS configuration and in particular on an initialization (CJnit value) of the pseudo random sequence.

FRAUNHOFER IIS ET AL: "UE panel-specific UL transmission", 3GPP DRAFT; R1 1900359, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Taipei, Taiwan; 20190121 - 2019012520 January 201 9 (201 9-01 -20), XP051593273 a panel-specific SRS with a UE panel ID equivalent to a SRS resource set ID.

### SUMMARY

The object of the present invention is to provide a communication method and apparatus, which may be applied to fields such as vehicle-to-everything V2X, or fields such as intelligent driving and intelligent connected vehicles, to resolve a technical problem that resource overheads are high during multi-antenna communication in a conventional technology. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

### BRIEF DESCRIPTION OF DRAWINGS

FIG. 1 is a schematic diagram of a panel configuration of a vehicle according to an embodiment of this application;
FIG. 2 is a schematic diagram of a panel configuration of a vehicle according to an embodiment of this application;
FIG. 3 is a schematic diagram of a system architecture of a communication method in a unicast application scenario according to an embodiment of this application;
FIG. 4 is a schematic diagram of a system architecture of a communication method in a groupcast application scenario according to an embodiment of this application;
FIG. 5 is a schematic diagram of a system architecture of a communication method in a broadcast application scenario according to an embodiment of this application;
FIG. 6 is a schematic flowchart of a communication method according to an embodiment of this application;
FIG. 7 is a schematic signaling flowchart of a communication method in a unicast scenario according to an embodiment of this application;
FIG. 8 is a schematic diagram in which a second electronic device sends first indication information to a first electronic device according to an embodiment of this application;
FIG. 9 is a schematic diagram of a specific scenario of a communication method in a unicast application scenario according to an embodiment of this application;
FIG. 10 is a schematic diagram of a time sequence of communication between a source vehicle and a destination vehicle according to an embodiment of this application;
FIG. 11 is a schematic signaling flowchart of a communication method in a broadcast scenario according to an embodiment of this application;
FIG. 12 is a schematic diagram of another specific scenario of a communication method in a unicast application scenario according to an embodiment of this application;
FIG. 13 is a schematic diagram of a structure of a second electronic device according to an embodiment of this application;
FIG. 14 is a schematic diagram of a structure of a first electronic device according to an embodiment of this application; and
FIG. 15 is a schematic diagram of a structure of hardware of a communication apparatus according to an embodiment of this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### DESCRIPTION OF EMBODIMENTS

A method in embodiments of this application may be applied to a long term evolution (long term evolution, LTE) system, a 5^{th} generation (5^{th} Generation, 5G) mobile communication system, or a future mobile communication system.

A first electronic device and a second electronic device described in embodiments of this application each may be a terminal device, a network device, a vehicle, or another electronic device, or may be a chip system, a circuit, a module, or the like in the vehicle or the another electronic device. This is not limited in this application. It should be noted that, for unified description, in embodiments provided in this application, the first electronic device and the second electronic device are used as examples for description.

In embodiments of this application, if the first electronic device is a network device, and the second electronic device is a terminal device; or if the first electronic device is a terminal device, and the second electronic device is a network device; or if the first electronic device is a network device, and the second electronic device is a network device, the first electronic device and the second electronic device may communicate based on a network system. For example, the network system may be a 5G communication system, an LTE communication system, a universal mobile telecommunications system (universal mobile telecommunications system, UMTS) terrestrial radio access network (UMTS terrestrial radio access network, UTRAN) system, a global system for mobile communication (global system for mobile communication, GSM)/enhanced data rate for GSM evolution (enhanced data rate for GSM evolution, EDGE) system radio access network (GSM EDGE radio access network, GERAN) architecture, a public land mobile network (public land mobile network, PLMN) system, a 6G system, a subsequent communication system, or the like. This is not limited in embodiments of this application.

A plurality of panels may be disposed in the terminal device. The terminal device may be an industrial robot, an industrial automation device, user equipment (user equipment, UE), an access terminal, a subscriber unit, a subscriber station, a mobile station, a remote station, a remote terminal, a mobile device, a user terminal, a terminal, a wireless terminal device, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network or a network after 5G, or a terminal device in a future evolved public land mobile network (public land mobile network, PLMN). This is not limited in this application.

A plurality of panels may be disposed in the network device, and the network device may be a device configured to communicate with the terminal device. For example, the network device may be a gNodeB (gNodeB, gNB) in a 5G new radio access technology (new radio access technology, NR), an evolved NodeB (evolved NodeB, eNB) in long term evolution (long term evolution, LTE), a NodeB (NodeB, NB) in a wideband code division multiple access (wideband code division multiple access, WCDMA) system, or a base transceiver station (base transceiver station, BTS) in a GSM system or a CDMA system. Alternatively, the network device may be a relay station, an access point, a vehicle-mounted device, a wearable device, a network side device in a network after 5G, a network device in a future evolved PLMN network, a road site unit (road site unit, RSU), a relay node having a base station resource allocation function, a terminal having a resource allocation function, or the like. This is not limited in this application.

The first electronic device and the second electronic device in embodiments of this application may alternatively communicate based on a vehicle to everything (vehicle to everything, V2X) system. In sidelink (Sidelink, SL) communication of the V2X system, a frequency range 2 (frequency range 2, FR2) may be applied, to implement deployment and application of frequency bands of above 6 GHz, and support functions such as vehicle platooning, extended sensors, and autonomous driving. Alternatively, in SL communication of the V2X system, the frequency range 2 may be applied to frequency bands below 6 GHz. This is not specifically limited in embodiments of this application.

For example, V2X may include four parts: vehicle-to-network (vehicle-to-network, V2N), vehicle-to-vehicle (vehicle-to-vehicle, V2V), vehicle-to-infrastructure (vehicle-to-infrastructure, V2I), and vehicle-to-pedestrian (V2P). The V2X mainly functions to connect a vehicle to a cloud server through a mobile network, to enable application functions such as navigation, entertainment, and thievery prevention that are provided by the cloud server. The V2V may be used for inter-vehicle information exchange and reminding, for example, inter-vehicle anti-collision reminding. The V2I may be used for communication between a vehicle and a road infrastructure (for example, a traffic light or a road barrier), to obtain road management information such as a time sequence of a traffic light signal. The V2P may be used by a vehicle to warn pedestrians or non-motor vehicles.

A plurality of panels may be configured in the first electronic device. The panel may also be referred to as an array panel, an antenna panel, or the like. The panel is an antenna array including several antennas, and the panel generally has directivity.

The plurality of panels may have different directions. For example, a quantity of panels may be represented by (M_{g}, N_{g}), where M_{g} represents a quantity of panels in a vertical dimension, and N_{g} represents a quantity of panels in a horizontal dimension. A single panel is represented by a number (m_{g}, n_{g}), where 0≤m_{g} < M_{g}, and 0≤n_{g} < N_{g}.

An antenna configuration of the single panel is represented by (M, N, P), where M indicates a quantity of antennas in a vertical dimension on the single panel, N indicates a quantity of antennas in a horizontal dimension on the single panel, and P indicates a polarization quantity of the antennas.

An orientation of the panel (m_{g}, n_{g}) is represented by (Ω_{mg,ng}, Θ_{mg,ng}), where Ω_{mg,ng} represents an azimuth angle, representing a horizontal direction angle of the panel, and Θ_{mg,ng} represents a tilt angle, representing a vertical direction angle of the panel.

It may be understood that, when the first electronic device is applied to a multiple-input multiple-output (multiple input multiple output, MIMO) system, a plurality of panels are disposed. This helps improve configuration flexibility of the MIMO system.

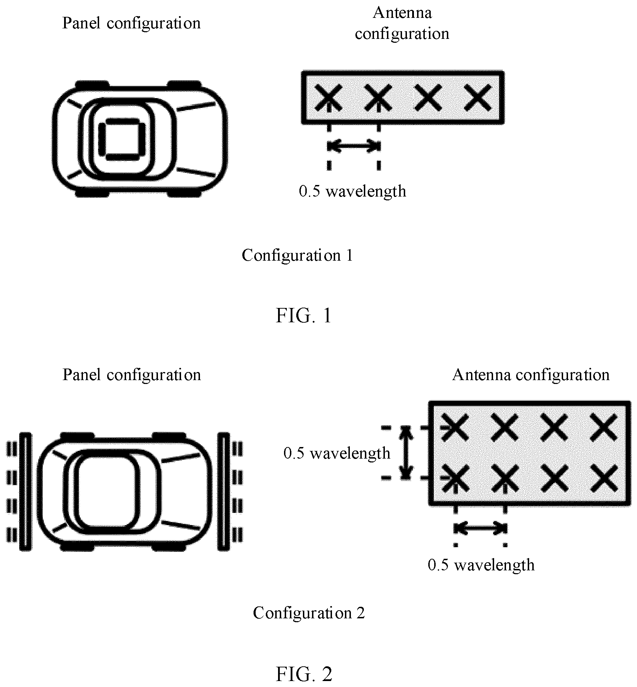

The first electronic device may have a plurality of panel configuration manners. For example, FIG. 1 shows a possible panel configuration manner (which may be referred to as a configuration 1) when the first electronic device is a vehicle. Four panels are installed on the top of the vehicle. The panel may include four dual-polarized antennas. Specific parameters may be as follows: (M, N, P, M_{g}, N_{g})=(1, 4, 2, 1, 4), Ω_{0,1}=Ω_{0,0}+90°, Ω_{0,2}=Ω_{0,0}+180°, Ω_{0,3}=Ω_{0,0}+270°, and Θ_{0,0}=Θ_{0,1}=Θ_{0,2}=Θ_{0,3}=90°. The vehicle may send a signal by using a wide beam or receive a signal by using a wide-angle-range spatial filter in four horizontal directions around.

For example, FIG. 2 shows another possible panel configuration manner (which may be referred to as a configuration 2) when the first electronic device is a vehicle. Two panels are installed on front and rear bumpers of the vehicle respectively. The panel may include eight dual-polarized antennas. Specific parameters may be as follows: (M, N, P, M_{g}, N_{g})=(2, 4, 2, 1, 2), Ω_{0,0}=0°, Ω_{0,1}=180°, and Θ_{0,0}=Θ_{0,1}=90°. The vehicle may send a signal by using a wide beam or receive a signal by using a wide-angle-range spatial filter in both forward and backward horizontal directions.

In a specific application, because the antennas on the panel are directional antennas, and the panel has directivity in both a vertical dimension and a horizontal dimension, if the vehicle selects an inappropriate panel when sending a signal, it is possible that the sent signal does not point to a receiver, or a spatial filter of the receiver may not cover the signal sent by the vehicle, or the signal sent by the vehicle may suffer an extra path loss or penetration loss. Consequently, the receiver and a transmitter are not matched, and a channel gain and a signal-to-noise ratio are reduced.

For a specific panel configuration of the second electronic device, refer to descriptions of the panel configuration of the first electronic device. The panel configuration of the second electronic device may be different from that of the first electronic device, or may be the same as that of the first electronic device. Details are not described herein again.

It may be understood that, because the first electronic device and the second electronic device each may include 32 single-polarized antennas, if the antenna is used as an object to be selected when the first electronic device communicates with the second electronic device, for each antenna port of the first electronic device or each antenna port of the second electronic device, a time domain resource needs to be allocated to send a sidelink sounding reference signal (Sidelink Sounding Reference Signal, SL-SRS), and resource overheads are large. In addition, link quality of different antenna ports is mainly affected by small-scale fading of a channel, and a rapid change of the small-scale fading requires high-frequency channel measurement to implement antenna selection. However, when both the first electronic device and the second electronic device are vehicles, link quality of a V2X SL during communication between different panels on an FR2 frequency band is mainly affected by a relative location between vehicles and existence of an obstacle between the vehicles. Because the relative location between the vehicles and the obstacle between the vehicles change slowly, low-frequency channel measurement may be required. Therefore, the manner in which the antenna is used as the object to be selected is not applicable to a scenario of communication between the first electronic device and the second electronic device.

In embodiments of this application, a multi-panel electronic device is used as a research object, and a communication method in which a panel of the first electronic device and a panel of the second electronic device are used as objects to be selected is proposed. When the first electronic device or the second electronic device performs communication, a process such as signal quality measurement, sending panel selection, or receiving panel selection may be performed by using a panel as a basic unit, and a reference signal resource does not need to be allocated to each antenna port, so that resource overheads are small.

When the panel is used as the object to be selected, related technical points may include:
Panel determination (panel determination): The panel determination is a process in which the transmitter or the receiver determines a sending panel or a receiving panel that should be selected.

Panel measurement (panel measurement): The panel measurement is a process in which the receiver measures a reference signal that is sent by the transmitter and that is related to panel selection.

Panel reporting (panel measurement): The panel reporting is a process in which the receiver reports a panel measurement result to the transmitter.

Panel sweeping (panel sweeping): The panel sweeping is a process in which the transmitter sequentially selects a panel for sending and the receiver sequentially selects a panel for receiving in a specific sequence.

Panel correspondence property: The receiver is capable of determining a sending panel of the receiver based on the selected receiving panel, and the transmitter is capable of determining a receiving panel of the transmitter based on the selected sending panel. For example, in the V2X SL, the panel correspondence illustratively means that a receiving panel of a destination vehicle UE may be used as a sending panel to send information (for example, reporting information) to a source vehicle UE, and a sending panel of the source vehicle UE may be used as a receiving panel to receive the information sent by the destination vehicle UE. The panel correspondence eliminates a process in which a receiver repeatedly selects a panel when sending information to a transmitter.

The foregoing technical points are described in detail in the following embodiments. Details are not described herein again.

It should be noted that although processes of beam determination, beam measurement, beam reporting, and beam sweeping may exist in beam management, the beam management is mainly oriented to a massive MIMO system. In current V2X SL communication, a quantity of antennas on a single panel of a vehicle UE is limited, and a narrow beam with specific directivity cannot be formed. Therefore, the beam management cannot be apparently applied to the panel-based communication method in embodiments of this application.

The method in embodiments of this application is applicable to unicast, groupcast, and broadcast application scenarios, and the like. An example in which both the first electronic device and the second electronic device are vehicles is described in the following embodiments.

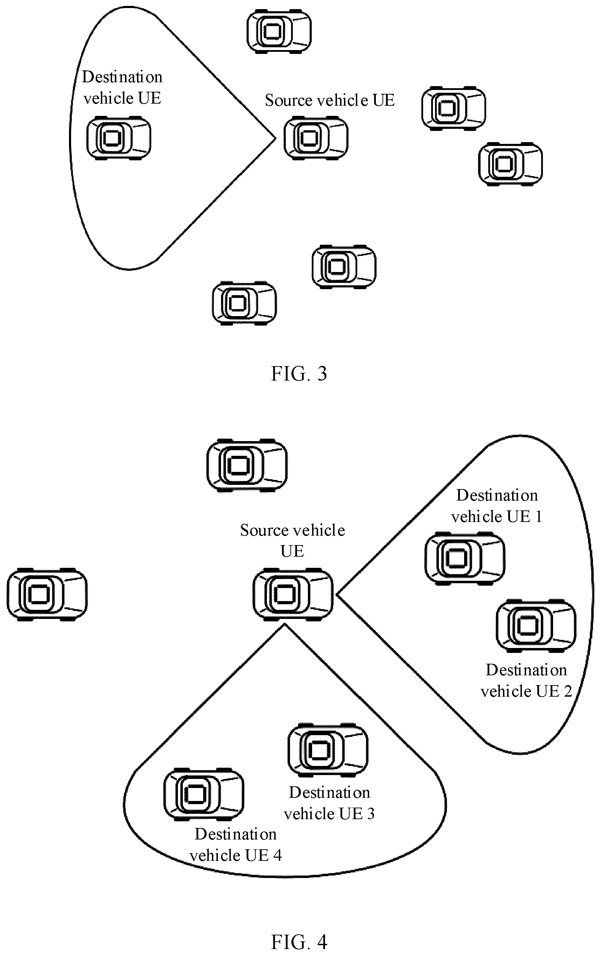

For example, FIG. 3 to FIG. 5 are schematic diagrams of three possible system architectures according to an embodiment of this application.

FIG. 3 is a schematic diagram of a system architecture of a method in a unicast application scenario according to an embodiment of this application. As shown in FIG. 3, in the unicast scenario, there may be one source vehicle UE (Source Vehicle UE) and one destination vehicle UE (Destination Vehicle UE). The source vehicle UE may serve as an information sending entity in a V2X SL, and the destination vehicle UE may serve as an information receiving entity in the V2X SL. The destination vehicle UE may further measure quality of a signal received from the source vehicle UE, and may send a result of the measurement to the source vehicle UE.

The source vehicle UE may send a beam (beam) to the destination vehicle UE. The beam may be sent in a directional radiation manner by a same antenna port on a panel of the source vehicle UE. The beam may be received in a directional spatial filtering manner by a same antenna port on a receiving panel of the destination vehicle UE. In FIG. 3, only the sent beam is marked, and is represented in a petal shape.

FIG. 4 is a schematic diagram of a system architecture of a method in a groupcast application scenario according to an embodiment of this application. As shown in FIG. 4, in the groupcast scenario, there may be one source vehicle UE and one group of destination vehicle UEs.

The source vehicle UE may send a beam to the group of destination vehicle UEs. A quantity of the destination vehicle UEs may be set based on an actual application scenario. This is not specifically limited in this embodiment of this application.

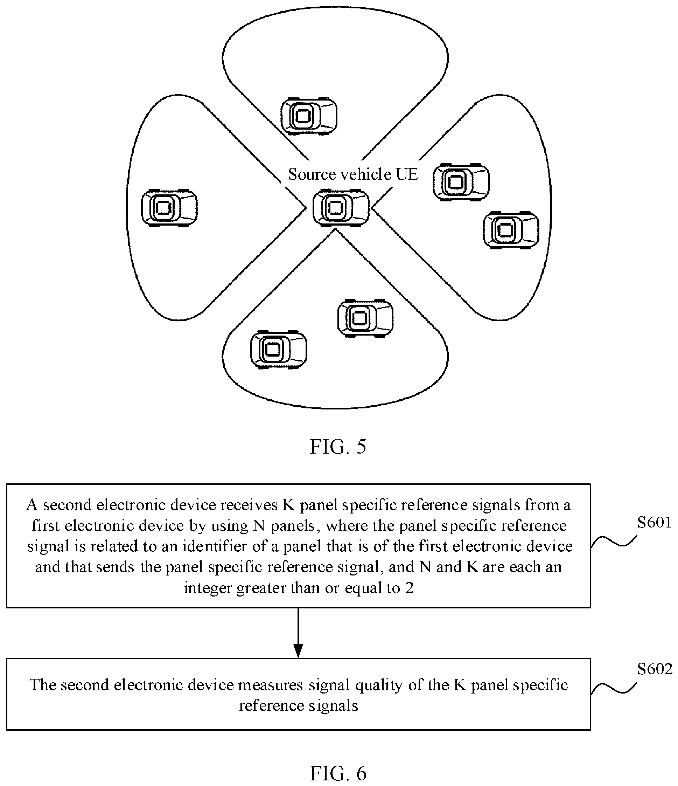

FIG. 5 is a schematic diagram of a system architecture of a method in a broadcast application scenario according to an embodiment of this application. As shown in FIG. 5, in the broadcast scenario, there may be one source vehicle UE, and destination vehicle UEs are not distinguished.

The source vehicle UE may broadcast a signal by using a plurality of panels, and the destination vehicle UE may be a vehicle that can receive the signal broadcast by the source vehicle UE.

An example in which the first electronic device is a source vehicle UE and the second electronic device is a destination vehicle UE is described in the following specific embodiments to detail the technical solutions of this application and how the technical solutions of this application resolve the foregoing technical problems. The following several specific embodiments may be implemented independently or combined with each other, and same or similar concepts or processes may not be repeatedly described in some embodiments.

FIG. 6 is a schematic flowchart of a communication method according to an embodiment of this application. As shown in FIG. 6, the method includes:
S601: A second electronic device receives K panel specific reference signals from a first electronic device by using N panels, where the panel specific reference signal is related to an identifier of a panel that is of the first electronic device and that sends the panel specific reference signal, and N and K are each an integer greater than or equal to 2.

S602: The second electronic device measures signal quality of the K panel specific reference signals.

In this embodiment of this application, the first electronic device may send the K panel specific reference signals to the second electronic device by using M panels. Adaptively, the second electronic device may receive the K panel specific reference signals from the first electronic device by using the N panels.

The panel specific reference signal in this embodiment of this application is a signal related to the identifier of the panel that sends the panel specific reference signal. A specific form of the panel specific reference signal may be a pseudo-random sequence, for example, a gold sequence. The identifier of the panel may be set based on an actual application scenario. This is not specifically limited in this embodiment of this application.

After receiving the K panel specific reference signals of the first electronic device by using the N panels, the second electronic device may measure the signal quality of the received K panel specific reference signals. For example, a reference signal received power (Reference Signal Received Power, RSRP) of each panel specific reference signal may be measured.

Optionally, a measurement result obtained by measuring the signal quality of the K panel specific reference signals may be used for determining, from the N panels, a first panel for receiving data sent by the first electronic device. The first panel may also be used by the second electronic device to send data to the first electronic device. That is, in this embodiment of this application, instead of using an antenna as a basic selection unit in the conventional technology, a panel that includes an antenna array including several antennas is used as a basic selection unit in communication, so that in multi-antenna communication, there is no need to allocate a reference signal resource to each antenna port, and therefore resource overheads are small.

Optionally, the second electronic device may send first indication information to the first electronic device by using the first panel, where the first indication information is indication information related to one or more panels of the first electronic device.

In this embodiment of this application, after measuring the signal quality of the K panel specific reference signals to obtain the measurement result, the second electronic device may learn that signal quality is good when one or more panels of the first electronic device send the panel specific reference signals. Therefore, the second electronic device may send, to the first electronic device by using the first panel, an identifier of the one or more panels that are of the first electronic device and that provide the good signal quality when sending the panel specific reference signals, or send the measurement result to the first electronic device. In this way, when the first electronic device needs to send data to the second electronic device, the first electronic device may determine, based on the first indication information, a panel for sending the data to the second electronic device. In this process, the first electronic device does not need to measure quality of signals between each panel of the first electronic device and each panel of the second electronic device. This reduces consumption of computing resources of the first electronic device.

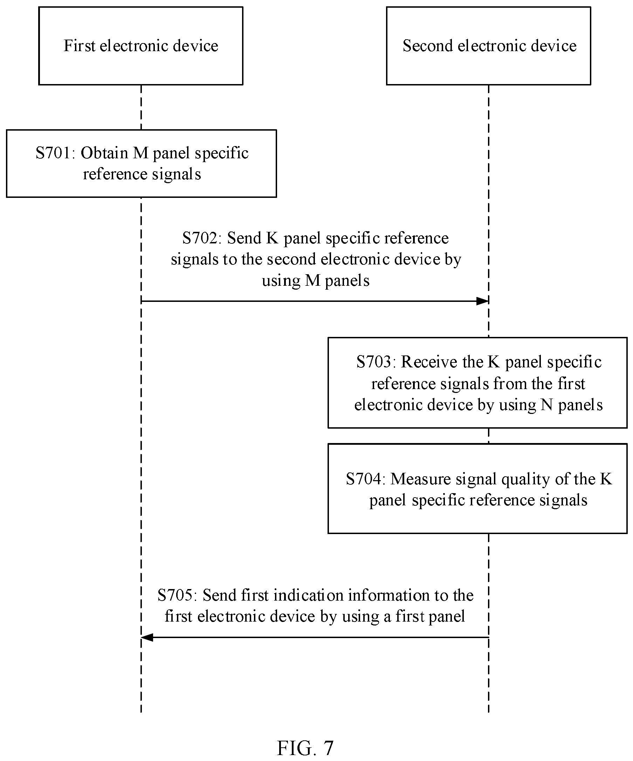

For example, FIG. 7 is a schematic signaling flowchart of a communication method in a unicast scenario according to an embodiment of this application.

S701: A first electronic device obtains M panel specific reference signals, where the panel specific reference signal is related to an identifier of a panel of the first electronic device, and M is an integer greater than or equal to 2.

In this embodiment of this application, the first electronic device may include M panels. Each panel may correspond to one panel specific reference signal, and the panel specific reference signal is a signal related to the identifier of any panel of the first electronic device, so that communication with the panel as a selection unit can be implemented based on the panel specific reference signal.

The first electronic device may generate the M panel specific reference signals based on the identifiers of the M panels respectively.

The first electronic device may alternatively obtain the M panel specific reference signals according to specifications of a protocol.

The first electronic device may alternatively obtain the M panel specific reference signals from a network device or another device. This is not specifically limited in this embodiment of this application.

In this embodiment of this application, the identifier of the panel may be configured according to a protocol or an actual application scenario. For example, the identifier of the panel may be a number. For example, in the foregoing panel configuration manner 1, a panel that faces the same direction as a vehicle may be numbered 0, and the other three panels are respectively numbered 1, 2, and 3 in a clockwise direction or a counter-clockwise direction, or the four panels in the vehicle may be randomly numbered 0, 1, 2, and 3, or the four panels in the vehicle may be randomly numbered. This is not limited in this embodiment of this application. In the foregoing panel configuration manner 2, two panels in the vehicle may be numbered differently from those in the panel configuration manner 1, for example, numbered 4 and 5, so that a specific panel can be identified based on a number of the panel.

Alternatively, an identifier i_{panel_ID} of the panel may be calculated from the number and an identifier in the panel configuration manner of the first electronic device. For example, n_{config} represents a panel configuration of the panel. A feasible representation manner is as follows: The configuration 1 corresponds to n_{colfig}=0, and the configuration 2 corresponds to n_{config}=1. Each panel is numbered a horizontal panel number n_{g} of a universal panel number (m_{g}, n_{g}). In a feasible manner, in the configuration 1, the panel that faces the same direction as the vehicle is numbered n_{g}=0, and the other panels are respectively numbered n_{g}=1, n_{g}=2, and n_{g}=3 in the clockwise direction. In the configuration 2, a panel that faces the same direction as the vehicle is numbered n_{g}=0, and the other panel is numbered n_{g}=1. The identifier i_{panel_ID} of the panel is calculated from n_{config} and n_{g}. For the plurality of panels in the configuration 1 and the configuration 2, a feasible panel identification method is i_{panel_ID} = 2²n_{config} + n_{g}. With reference to the foregoing n_{config} and n_{g} representation methods, the panels in the configuration 1 are identified as i_{panel_ID}=0, 1, 2, 3, and the two panels in the configuration 2 are identified as i_{panel_ID}=4, 5.

It may be understood that the identifier of the panel may alternatively be represented in another manner based on an actual application scenario. This is not specifically limited in this embodiment of this application.

The panel specific reference signal in this embodiment of this application may include a plurality of forms. In this embodiment of this application, a first panel specific reference signal is described as an example.

In a possible implementation, a pseudo-random sequence initial value of the first panel specific reference signal is related to an identifier of a panel that sends the panel specific reference signal.

The first panel specific reference signal may be defined as a panel specific reference signal (Panel Specific Reference Signal, PS-RS), or may be defined as a signal with another name. For example, the first panel specific reference signal is the PS-RS. The PS-RS is a reference signal for representing a signal source panel, and includes identification information of the panel. A generation process of the PS-RS is affected by a configuration and a number of the corresponding panel.

Optionally, a pseudo-random sequence initial value C1ᵢₙᵢₜ of the PS-RS satisfies an equation: ${C 1}_{init} = {2}^{11} \left({i}_{panel_ID}+1\right) + {2}^{6} \left({i}_{panel_ID}+1\right) .$

S702: The first electronic device sends K panel specific reference signals to a second electronic device by using the M panels, where the first electronic device sends one or more panel specific reference signals on any one of the M panels, and K is an integer greater than or equal to M.

S703: The second electronic device receives the K panel specific reference signals from the first electronic device by using N panels.

In this embodiment of this application, each panel of the first electronic device may send a panel specific reference signal corresponding to the panel, and each panel may send one or more panel specific reference signals corresponding to the panel. Therefore, K may be an integer greater than or equal to M.

In this embodiment of this application, for example, the panel specific reference signal is the PS-RS. The PS-RS may be mapped to one time unit (for example, a slot) in a manner of performing frequency division multiplexing, time division multiplexing, or both on a physical sidelink control channel (Physical Sidelink Control Channel, PSCCH) or a physical sidelink shared channel (Physical Sidelink Shared Channel, PSSCH). When the panel of the first electronic device sends the PS-RS, sidelink control information (Sidelink Control Information, SCI) may carry existence indication information of the PS-RS and/or a resource mapping mode of the PS-RS. Optionally, in the unicast scenario, the SCI may further carry information for indicating a time-frequency resource that is used by the second electronic device to subsequently report a measurement result.

In an optional implementation, the first electronic device sends the K panel specific reference signals to the second electronic device in a plurality of time units sequentially by using the M panels. For example, the first electronic device may sequentially select, in a specific time sequence, a panel to send a time unit including a PS-RS. Adaptively, the second electronic device may receive, in a plurality of time units by using the N panels, the K panel specific reference signals from the first electronic device. Because the panels of the first electronic device send the panel specific reference signals in a time-division manner, interference between the panel specific reference signals sent by the panels can be avoided, so that the second electronic device can subsequently obtain the relatively accurate measurement result when measuring signal quality.

In another optional implementation, the first electronic device sends the K panel specific reference signals to the second electronic device in one time unit by using the M panels. For example, the first electronic device may send the K panel specific reference signals to the second electronic device simultaneously in one time unit by using the M panels. Adaptively, the second electronic device may receive the K panel specific reference signals from the first electronic device in one time unit by using the N panels. Because the M panels of the first electronic device simultaneously send the panel specific reference signals to the second electronic device, consumption of time resources for sending the panel specific reference signals can be reduced.

S704: The second electronic device measures the signal quality of the K panel specific reference signals.

In this embodiment of this application, the second electronic device may measure an RSRP of the received K panel specific reference signals. Therefore, an optimal receiving panel may be determined based on the measured RSRP of the K panel specific reference signals. The optimal receiving panel may alternatively be a sending panel used when the second electronic device sends information to the first electronic device. For example, the second electronic device obtains eight RSRPs in a sweeping process of the sending panel: P_{4,0}, P_{5,0}, P_{4,1}, P_{5,1}, P_{4,2}, P_{5,2}, P_{4,3}, and P_{5,3}. Herein, the largest value is P_{5,0}. The second electronic device may determine a panel 5 as the optimal receiving panel based on the largest value.

Optionally, the second electronic device may perform blind detection to obtain a panel identifier of a panel that is of the first electronic device and that is corresponding to the panel specific reference signals, and then determine a start point and an end point of sweeping time of the panel of the first electronic device based on the panel identifier.

For example, it is assumed that *P*_{*j*_{panel_ID},*i*_{panel_ID}} represents an RSRP that is measured on a panel i_{panel_ID} of the second electronic device and that is of a PS-RS sent by a panel *i*_{panel_ID} of the first electronic device. In the measurement process, after performing blind detection to obtain *i*_{panel_ID} information carried by a PS-RS, the second electronic device obtains the start point and the end point of the sweeping time of the panel of the first electronic device and a current sweeping progress, to determine a quantity of swept sending panels and a quantity of sending panels to be swept. For example, the panels of the first electronic device use the configuration 1 and the panels of the second electronic device use the configuration 2. After performing blind detection on a PS-RS received by a panel 5 to obtain *i*_{panel_ID} = 0, the second electronic device determines that a current sending panel has been swept, and other three sending panels are to be swept. Therefore, the second electronic device may reserve a resource for receiving the panel specific reference signals of the first electronic device.

S705: The second electronic device sends first indication information to the first electronic device by using a first panel, where the first panel is related to the signal quality of the K panel specific reference signals, and the first indication information is indication information related to one or more panels of the first electronic device.

In this embodiment of this application, the second electronic device may obtain, from the first electronic device, a time-frequency resource indication that is in the SCI and that is used for sending the first indication information. The first indication information may be set in the SCI, and sent to the first electronic device in a corresponding time domain.

In this embodiment of this application, the second electronic device may use, as the first panel, a panel that receives a reference signal with a largest RSRP, to send the first indication information to the first electronic device. The first indication information may include one or more measurement results. Alternatively, a panel that receives a reference signal with a second largest RSRP or a third largest RSRP may be used as the first panel, to send the first indication information and the like to the first electronic device. This is not specifically limited in this embodiment of this application.

The first indication information may be related to one panel of the first electronic device. For example, the first indication information may include an identifier of a panel corresponding to a largest RSRP in the first electronic device, and/or the largest RSRP. Because the first indication information includes relatively little content, consumption of signaling resources can be reduced. After receiving the first indication information, the first electronic device may directly use, as an optimal panel for communicating with the second electronic device, a panel corresponding to the panel identifier included in the first indication information.

The first indication information may alternatively be related to a plurality of panels of the first electronic device. For example, the first information may include identifiers of panels that are of the first electronic device and that are corresponding to q large RSRPs, and/or the q RSRPs, where q may be a positive integer greater than or equal to 2. In this embodiment of this application, the largest RSRP reflects a current optimal communication panel of the first electronic device and the second electronic device. As locations of the first electronic device and the second electronic device change, a link corresponding to the largest RSRP may fail. Therefore, the first indication information includes a plurality of panel identifiers, and the first electronic device may select an adaptive panel from the plurality of panels according to a requirement, to ensure robustness of communication.

In a possible implementation, the first indication information includes one or more groups of panel information, and each group of panel information includes at least one of the following: an identifier of any panel of the first electronic device, an identifier of any panel of the second electronic device, or a measurement result of a reference signal corresponding to the group of panel information.

For example, Table 1 shows possible content included in the first indication information. An identifier of a sending panel may be an identifier of a panel of the first electronic device, and an identifier of a receiving panel may be an identifier of a panel of the second electronic device.

**Table 1**

| First indication information | | |
|---|---|---|
| Identifier of a sending panel | Identifier of a receiving panel | RSRP |
| 1 | 3 | P_{3,1} |
| 0 | 2 | P_{2,0} |

In another possible implementation, the first indication information includes one or more pieces of panel information, and each piece of panel information includes at least one of the following: an identifier of any panel of the first electronic device and a measurement result of a reference signal corresponding to the any panel.

For example, Table 2 shows possible content included in the first indication information. An identifier of a sending panel may be an identifier of a panel of the first electronic device.

**Table 2**

| First indication information | |
|---|---|
| Identifier of a sending panel | RSRP |
| 1 | P_{3,1} |
| 0 | P_{2,0} |

A difference between Table 2 and Table 1 lies in that Table 2 does not include panel identifiers of the second electronic device, so that consumption of signaling resources can be reduced in the embodiment corresponding to Table 2. However, Table 1 includes the panel identifiers of the second electronic device, so that the first electronic device can learn a situation of the second electronic device.

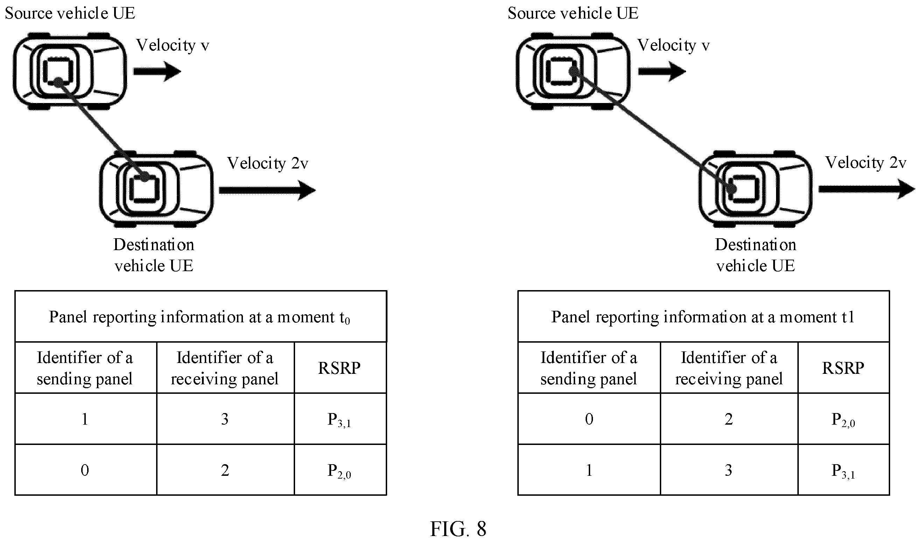

For example, FIG. 8 is a beneficial effect schematic diagram in which a destination vehicle UE reports a plurality of groups of RSRPs and identifiers of corresponding sending and receiving panels to a source vehicle UE.

As shown in FIG. 8, both the source vehicle UE and the destination vehicle UE use the configuration 1. To be specific, four panels are installed on the top of each vehicle, and both vehicles move eastward at speeds of v and 2v respectively. At a moment t₀, the destination vehicle UE reports RSRPs of two panel selection solutions, and the largest RSRP is *P*_{3,1}. Therefore, at the moment t₀, the source vehicle UE selects 1 as a sending panel, and the destination vehicle UE selects 3 as an optimal receiving panel. A V2X SL is marked by a connection line between the sending panel and the optimal receiving panel. Because the destination vehicle UE is high in speed, the sending panel 1 gradually cannot cover the receiving panel 3, and therefore *P*_{3,1} gradually decreases. On the contrary, *P*_{2,0} corresponding to the other panel selection solution gradually increases. The source vehicle UE predicts, based on a change of the RSRP, that the sending panel of the source vehicle UE is to be switched to 0, and the receiving panel of the destination vehicle UE is to be switched to 2. At a moment t₁, the sending panel and the receiving panel are switched for the link, and the largest RSRP in panel reporting changes to *P*_{2,0}, which is consistent with prediction. In addition, because an optimal panel selection solution and a suboptimal panel selection solution are provided in the panel reporting, when the link fails in the optimal panel selection solution, the source vehicle UE is capable of quickly attempting to restore link communication by using the suboptimal panel selection solution.

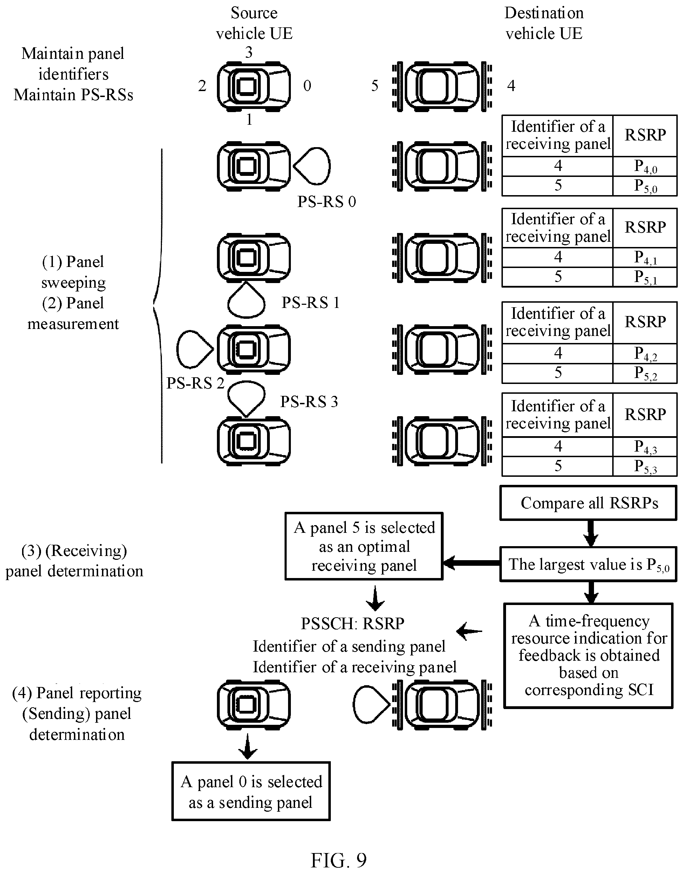

For example, FIG. 9 is a schematic diagram of a unicast application scenario in which a first electronic device is a source vehicle UE and a second electronic device is a destination vehicle UE.

The source vehicle UE may maintain panel identifiers (which may also be referred to as identifiers of panels) and PS-RSs (including, for example, a PS-RS 0, a PS-RS 1, a PS-RS 2, and a PS-RS 3), perform panel sweeping, and sequentially send the PS-RS 0, the PS-RS 1, the PS-RS 2, and the PS-RS 3 to the destination vehicle UE. The destination vehicle UE may measure RSRPs of the received PS-RSs while receiving the PS-RSs, or may measure the RSRPs of the PS-RSs after the PS-RS 0, the PS-RS 1, the PS-RS 2, and the PS-RS 3 are all received. This is not limited in this embodiment of this application.

The destination vehicle UE may use a panel corresponding to a largest RSRP as an optimal panel, and send, to the source vehicle UE by using the optimal panel, an identifier of a sending panel and an identifier of a receiving panel that are corresponding to the largest RSRP, or may send, to the source vehicle UE, identifiers of sending panels and identifiers of receiving panels that are corresponding to a plurality of large RSRPs.

The source vehicle UE may determine an optimal panel of the source vehicle UE based on information sent by the destination vehicle UE, and then send or receive data to or from the destination vehicle UE by using the optimal panel.

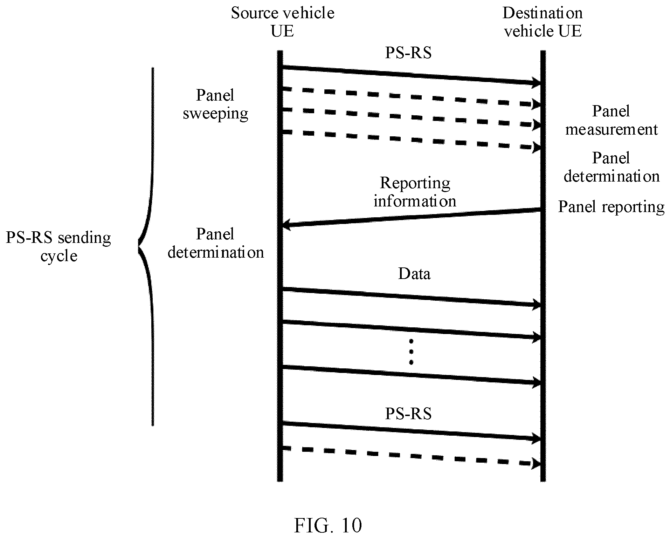

For example, FIG. 10 is a schematic diagram of a time sequence of communication between a source vehicle UE and a destination vehicle UE according to an embodiment of this application. In a panel sweeping step, the source vehicle UE may select different panels in a plurality of slots to send associated reference signals. The source vehicle UE requires four slots in the panel configuration 1 and requires two slots in the panel configuration 2. In addition, the destination vehicle UE performs panel measurement and performs receiving panel determination after the measurement ends. Then, the destination vehicle UE sends reporting information to the source vehicle UE in one slot, and the source vehicle UE performs sending panel determination based on the reporting information. After a sending panel is determined, the source vehicle UE sends data information to the destination vehicle UE by using the panel through a PSSCH. A PS-RS sending cycle in the figure refers to an interval between two times of panel sweeping, and represents a periodicity of performing panel selection. The panel selection is periodically performed to update a result of the panel selection. In addition, the panel selection may alternatively be performed aperiodically, and a panel selection process is re-triggered when a link fails.

In a possible implementation, the panel specific reference signal corresponding to FIG. 7 may be a second panel specific reference signal. The second panel specific reference signal is different from the first panel specific reference signal.

In a possible implementation, the second panel specific reference signal is related to at least one of the following: an identifier of a panel that sends the panel specific reference signal, or a pseudo-random sequence initial value of a physical sidelink control channel demodulation reference signal (Physical Sidelink Control Channel Demodulation Reference Signal, PSCCH DMRS).

In this embodiment of this application, the second panel signal may be defined as a PSCCH DMRS, but the PSCCH DMRS has a different meaning from a PSCCH DMRS in a historical protocol. The second panel signal may alternatively be defined as another name. This is not specifically limited in this embodiment of this application.

Optionally, a pseudo-random sequence initial value C2ᵢₙᵢₜ of the second panel specific reference signal satisfies an equation: ${C 2}_{init} = \left({2}^{l}{C 2}_{init , 0}+{i}_{panel_ID}\right) mod {2}^{31} .$

Herein, C2_{init,0} is an original pseudo-random sequence initial value of the PSCCH DMRS in the historical protocol. The original pseudo-random sequence initial value may also be understood as the pseudo-random sequence initial value of the PSCCH DMRS existing when panel selection is not considered, and 1 is related to a total quantity of panel identifiers defined in a network. The total quantity of the panel identifiers defined in the network may be a total quantity of all panel identifiers in the panel configuration that may exist in the network. For example, the total quantity of the panel identifiers in the foregoing embodiment is 6, and the value of 1 may be 3.

Because a DMRS may be generated based on a pseudo-random sequence, in this embodiment, under a condition that a function of the DMRS and accuracy of blind detection are not affected, a pseudo-random sequence initial value C2ᵢₙᵢₜ of the DMRS is changed to carry a panel identifier. In addition, because the PSCCH DMRS is endowed with a new function, a new reference signal resource does not need to be allocated, so that consumption of signaling resources can be reduced.

In a possible implementation, the panel specific reference signal corresponding to FIG. 7 may be a third panel specific reference signal. The third panel specific reference signal is different from the first panel specific reference signal.

In a possible implementation, the third panel specific reference signal is related to at least one of the following: the identifier of the panel that sends the panel specific reference signal, or a pseudo-random sequence initial value of a physical sidelink broadcast channel demodulation reference signal (Physical Sidelink Broadcast Channel Demodulation Reference Signal, PSBCH DMRS).

In this embodiment of this application, the third panel signal may be defined as a PSBCH DMRS, but the PSBCH DMRS has a different meaning from a PSBCH DMRS in the historical protocol. The third panel signal may alternatively be defined as another name. This is not specifically limited in this embodiment of this application.

Optionally, a pseudo-random sequence initial value C3ᵢₙᵢₜ of the third panel specific reference signal satisfies an equation: ${C 3}_{init} = \left({2}^{l}{C 3}_{init , 0}+{i}_{panel_ID}\right) mod {2}^{31} .$

Herein, C3_{init,0} is an original pseudo-random sequence initial value of the PSBCH DMRS in the historical protocol. The original pseudo-random sequence initial value may also be understood as the pseudo-random sequence initial value of the PSBCH DMRS existing when panel selection is not considered, and 1 is related to the total quantity of the panel identifiers defined in the network. The total quantity of the panel identifiers defined in the network may be the total quantity of all the panel identifiers in the panel configuration that may exist in the network. For example, the total quantity of the panel identifiers in the foregoing embodiment is 6, and the value of 1 may be 3.

In this embodiment of this application, the first electronic device may sequentially select a panel to send a sidelink synchronization signal block (Sidelink Synchronization Signal Block, SL-SSB), and a PSBCH in the SL-SSB carries the third panel specific reference signal. Because the PSBCH DMRS is endowed with a new function, a new reference signal resource does not need to be allocated, so that consumption of signaling resources can be reduced.

In a possible implementation, the panel specific reference signal corresponding to FIG. 7 may be a fourth panel specific reference signal. The fourth panel specific reference signal is different from the first panel specific reference signal.

In a possible implementation, the fourth panel specific reference signal is related to at least one of the following: the identifier of the panel that sends the panel specific reference signal, or a pseudo-random sequence initial value of a sidelink channel state information reference signal (Sidelink Channel State Information Reference Signal, SL-CSI-RS).

In this embodiment of this application, the fourth panel signal may be defined as an SL-CSI-RS, but the SL-CSI-RS has a different meaning from an SL-CSI-RS in the historical protocol. The fourth panel signal may alternatively be defined as another name. This is not specifically limited in this embodiment of this application.

Optionally, a pseudo-random sequence initial value C4ᵢₙᵢₜ of the fourth panel specific reference signal satisfies an equation: ${C 4}_{init} = \left({2}^{l}{C 4}_{init , 0}+{i}_{panel_ID}\right) mod {2}^{31} .$

Herein, C4ᵢₙᵢₜ₀ is an original pseudo-random sequence initial value of the SL-CSI-RS in the historical protocol. The original pseudo-random sequence initial value may also be understood as the pseudo-random sequence initial value of the SL-CSI-RS existing when panel selection is not considered, and 1 is related to the total quantity of the panel identifiers defined in the network. The total quantity of the panel identifiers defined in the network may be the total quantity of all the panel identifiers in the panel configuration that may exist in the network. For example, the total quantity of the panel identifiers in the foregoing embodiment is 6, and the value of 1 may be 3.

In this embodiment of this application, when sending first indication information to the first electronic device, the second electronic device may send, to the first electronic device on a specific time-frequency resource for feeding back the SL-CSI-RS, PSSCH reporting information that carries the first indication information.

In this embodiment of this application, because the SL-CSI-RS is endowed with a new function, a new reference signal resource does not need to be allocated, so that consumption of signaling resources can be reduced.

It should be noted that C1ᵢₙᵢₜ, C2ᵢₙᵢₜ, C3ᵢₙᵢₜ, and C4ᵢₙᵢₜ in this embodiment of this application are defined to distinguish among the pseudo-random sequence initial values of the first reference signal to the fourth reference signal, and may be unified as Cᵢₙᵢₜ in an application. This is not specifically limited in this embodiment of this application.

For example, when the communication method in this embodiment of this application is applied to a groupcast scenario, a difference from the embodiment corresponding to the unicast scenario is that when the first electronic device sends the K panel specific reference signals by using the M panels, each second electronic device in a group of second electronic devices (which may include a plurality of second electronic devices) separately receives the K panel specific reference signals from the first electronic device by using a plurality of panels, and separately performs the corresponding steps that the second electronic device measures the signal quality of the K panel specific reference signals and optionally sends the first indication information to the first electronic device in the unicast scenario. For details, refer to the description of the embodiment of the unicast scenario. Details are not described herein again. Optionally, a difference from the embodiment corresponding to the unicast scenario is that for each sending panel, the first electronic device may separately specify the second electronic device to report a panel measurement result on a time-frequency resource after sweeping of the sending panel ends.

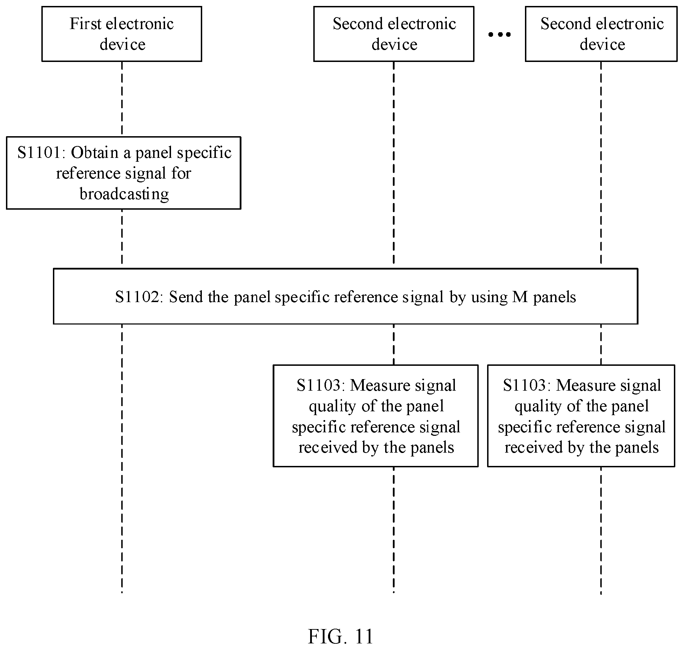

For example, FIG. 11 is a schematic signaling flowchart of a communication method in a broadcast scenario according to an embodiment of this application.

S1101: A first electronic device obtains a panel specific reference signal for broadcasting.

S1102: The first electronic device sends the panel specific reference signal by using M panels.

S1103: One or more second electronic devices measure signal quality of the panel specific reference signal received by the panels.

In this embodiment of this application, the panel specific reference signal for broadcasting may be any one of the first panel signal to the fourth panel signal. Optionally, the pseudo-random sequence initial value of the panel specific reference signal for broadcasting is set to be a special value. For example, in PS-RSs, a PS-RS obtained when all bits of C1ᵢₙᵢₜ are 0 may be set as panel reference information for broadcasting, or a PS-RS obtained when all bits of C1ᵢₙᵢₜ are 1 may be set as panel reference information for broadcasting, or the panel specific reference signal dedicated for broadcasting is set based on an actual application scenario. This is not specifically limited in this embodiment of this application.

The panel specific reference signal for broadcasting may be generated by the first electronic device, or may be set in a protocol. This is not specifically limited in this embodiment of this application.

The first electronic device may send the panel specific reference signal by using the M panels, so that the one or more second electronic devices that can receive the panel specific reference signal may separately measure RSRPs of the panel specific reference signal received by each panel of the one or more second electronic devices, and learn, through blind detection, that the panel specific reference signal sent by the first electronic device is used for broadcasting. Each second electronic device may compare the RSRPs corresponding to different panels, and determine an optimal receiving panel to receive data in a broadcast application scenario. Optionally, if the second electronic device has information to be sent to the first electronic device, the second electronic device may use the optimal receiving panel as the sending panel.

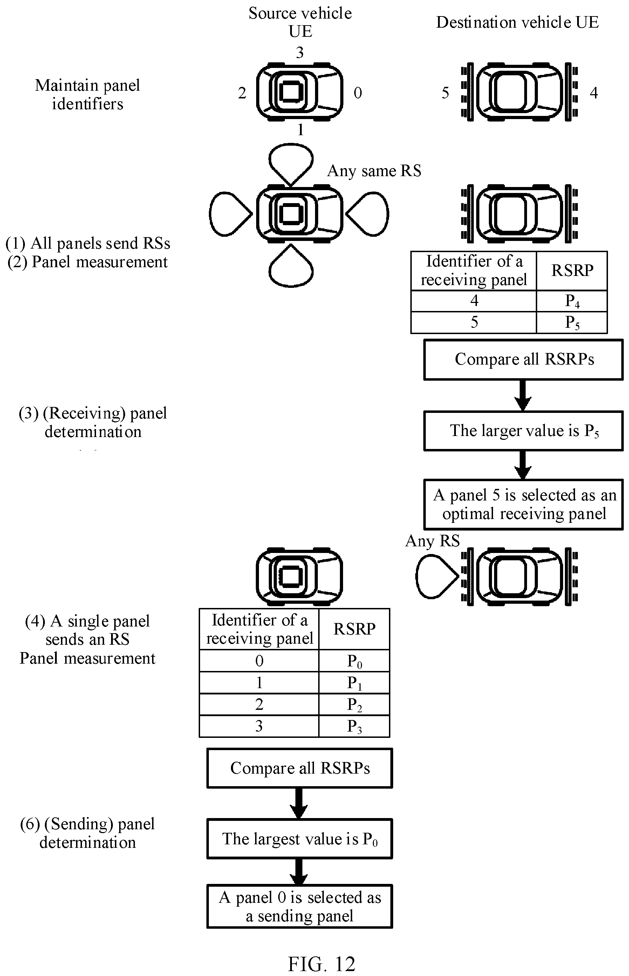

For example, FIG. 12 is a schematic diagram of another unicast application scenario in which a first electronic device is a source vehicle UE and a second electronic device is a destination vehicle UE.

It should be noted that the panel identification method, the panel specific reference signal measurement method, and the panel determining method in this embodiment are similar to those recorded in embodiments in FIG. 6 to FIG. 9. Details are not described herein again. Different from embodiments in FIG. 6 to FIG. 9, in this embodiment, panel sweeping, panel reporting, and obtaining of a panel specific reference signal need to be performed.

Specifically, in this embodiment of this application, (1) the source vehicle UE simultaneously sends signals by using all panels. The source vehicle UE may send any same reference signal in a broadcast manner by using all the panels. Optional reference signals may include a PSCCH DMRS, a PSSCH DMRS, an SL-SSB, an SL-CSI-RS, or the like in an existing protocol.

(2) Panels of the destination vehicle UE are used for measurement. The destination vehicle UE measures an RSRP of a selected reference signal by using each receiving panel. For example, *P*_{*j*_{panel_ID}} represents an RSRP measured on a panel *j*_{panel_ID}.

(3) An optimal receiving panel of the destination vehicle UE is determined. The destination vehicle UE compares all RSRPs to determine the optimal receiving panel. Based on the panel correspondence property, the optimal receiving panel is also a sending panel that the destination vehicle UE should use to send information to the source vehicle UE. The scenario setting in FIG. 12 is used as an example. The destination vehicle UE obtains two RSRPs: P₄ and P₅. Herein, the larger value is P₅. The destination vehicle UE determines, based on the larger value, that a panel 5 is the optimal receiving panel.

(4) The destination vehicle UE sends a signal by using the selected panel. Corresponding to the reference signal used by the source vehicle UE, the destination vehicle UE sends a same reference signal by using the receiving panel in step (3) based on the panel correspondence property.

(5) The panels of the source vehicle UE are used for measurement. The source vehicle UE measures an RSRP of a selected reference signal by using each receiving panel. *P*_{*i*_{panel_ID}} represents an RSRP measured on a panel *i*_{panel_ID}.

(6) A sending panel of the source vehicle UE is determined. The source vehicle UE compares all RSRPs to determine the optimal receiving panel, and determines, based on the panel correspondence property, that the optimal receiving panel is also an optimal sending panel. The scenario setting in FIG. 12 is used as an example. The source vehicle UE obtains four RSRPs: P₀, P₁, P₂, and P₃. Herein, the largest value is P₀. The source vehicle UE determines, based on the largest value, that a panel 0 is the optimal receiving panel and is also the optimal sending panel.

It may be understood that, for a V2X SL broadcast scenario, only steps (1), (2), and (3) in this embodiment are required.

In this embodiment of this application, the source vehicle UE does not need to obtain the panel specific reference signal, and the destination vehicle UE does not need to report a signal measurement result to the source vehicle UE either. Therefore, slot resources occupied by panel sweeping can be reduced, and a delay is low.

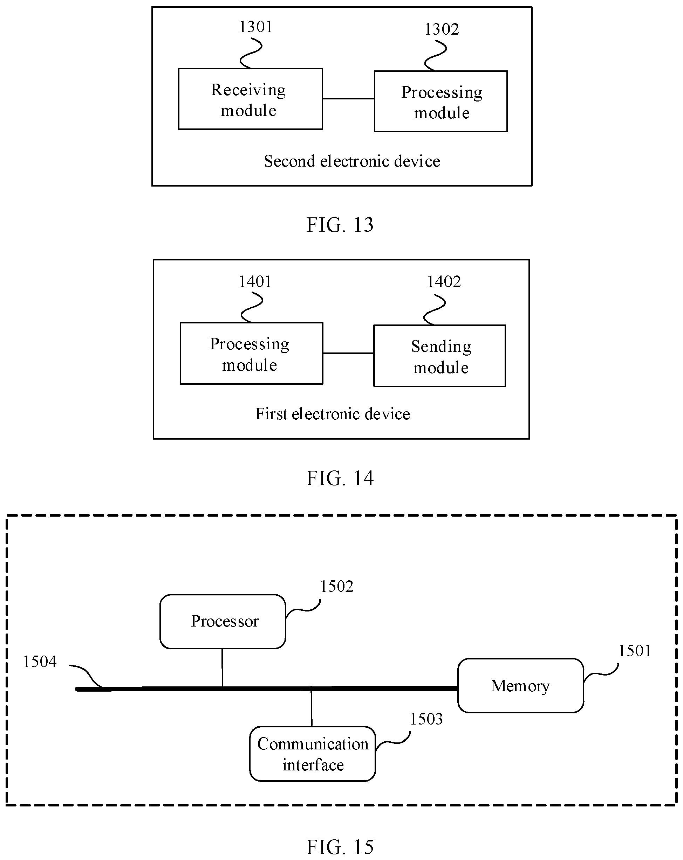

FIG. 13 is a schematic diagram of a structure of a second electronic device according to an embodiment of this application. The second electronic device includes: a receiving module 1301 and a processing module 1302. The receiving module is configured to receive K panel specific reference signals from a first electronic device by using N panels, where the panel specific reference signal is related to an identifier of a panel that is of the first electronic device and that sends the panel specific reference signal, and N and K are each an integer greater than or equal to 2. The processing module is configured to measure signal quality of the K panel specific reference signals.

In a possible design, the second electronic device further includes: a sending module, configured to send first indication information to the first electronic device by using a first panel, where the first panel is related to the signal quality of the K panel specific reference signals, and the first indication information is indication information related to one or more panels of the first electronic device.

In a possible design, the panel specific reference signal includes one or more of the following signals: a first panel specific reference signal, where a pseudo-random sequence initial value of the first panel specific reference signal is related to the identifier of the panel that sends the panel specific reference signal; a second panel specific reference signal, where the second panel specific reference signal is related to at least one of the following: the identifier of the panel that sends the panel specific reference signal, or a pseudo-random sequence initial value of a physical sidelink control channel demodulation reference signal PSCCH DMRS; a third panel specific reference signal, where the third panel specific reference signal is related to at least one of the following: the identifier of the panel that sends the panel specific reference signal, or a pseudo-random sequence initial value of a physical sidelink broadcast channel demodulation reference signal PSBCH DMRS; and a fourth panel specific reference signal, where the fourth panel specific reference signal is related to at least one of the following: the identifier of the panel that sends the panel specific reference signal, or a pseudo-random sequence initial value of a sidelink channel state information reference signal SL-CSI-RS.

In a possible design, for any panel that is of the first electronic device and that sends the panel specific reference signal, an identifier of the panel is i_{panel-ID};
the pseudo-random sequence initial value C1ᵢₙᵢₜ of the first panel specific reference signal satisfies an equation: C1ᵢₙᵢₜ = 2¹¹(i_{panel_ID} + 1) + 2⁶(i_{panel_ID} + 1); and/or
a pseudo-random sequence initial value C2ᵢₙᵢₜ of the second panel specific reference signal satisfies an equation: C2ᵢₙᵢₜ = (2^{l}C2_{init,0} + i_{panel_ID})mod 2³¹, where C2_{init,0} is the pseudo-random sequence initial value of the PSCCH DMRS, and l is related to a total quantity of panel identifiers defined in a network; and/or
a pseudo-random sequence initial value C3ᵢₙᵢₜ of the third panel specific reference signal satisfies an equation: C3ᵢₙᵢₜ = (2^{l}C3_{init,0} + i_{panel_ID})mod 2³¹, where C3_{init,0} is the pseudo-random sequence initial value of the PSBCH DMRS, and l is related to the total quantity of the panel identifiers defined in the network; and/or
a pseudo-random sequence initial value C4ᵢₙᵢₜ of the fourth panel specific reference signal satisfies an equation: C4ᵢₙᵢₜ = (2^{l}C4_{init,0} + i_{panel_ID})mod 2³¹, where C4ᵢₙᵢₜ₀ is the pseudo-random sequence initial value of the SL-CSI-RS, and l is related to the total quantity of the panel identifiers defined in the network.

In a possible design, the first indication information includes one or more pieces of panel information, and each piece of panel information includes at least one of the following: the identifier of any panel of the first electronic device and a measurement result of a reference signal corresponding to the any panel.

In a possible design, the first indication information includes one or more groups of panel information, and each group of panel information includes at least one of the following: the identifier of any panel of the first electronic device, an identifier of any panel of the second electronic device, or a measurement result of a reference signal corresponding to the group of panel information.

In a possible design, the receiving module is specifically configured to: receive the K panel specific reference signals from the first electronic device in a plurality of time units by using the N panels; or receive the K panel specific reference signals from the first electronic device in one time unit by using the N panels.

The apparatus in this embodiment may be correspondingly configured to perform the steps performed by the second electronic device in the foregoing method embodiment. Implementation principles and technical effects thereof are similar. Details are not described herein again.

FIG. 14 is a schematic diagram of a structure of a first electronic device according to an embodiment of this application. The first electronic device includes: a processing module 1401 and a sending module 1402. The processing module is configured to obtain M panel specific reference signals. The sending module is configured to send K panel specific reference signals to a second electronic device by using M panels, where the first electronic device sends one or more panel specific reference signals on any one of the M panels, the panel specific reference signal is related to an identifier of a panel that sends the panel specific reference signal, M is an integer greater than or equal to 2, and K is an integer greater than or equal to M.

In a possible design, the first electronic device further includes: a receiving module, configured to receive first indication information from the second electronic device, where the first indication information is indication information related to one or more panels of the first electronic device.

In a possible design, the panel specific reference signal includes one or more of the following signals: a first panel specific reference signal, where a pseudo-random sequence initial value of the first panel specific reference signal is related to the identifier of the panel that sends the panel specific reference signal; a second panel specific reference signal, where the second panel specific reference signal is related to at least one of the following: the identifier of the panel that sends the panel specific reference signal, or a pseudo-random sequence initial value of a physical sidelink control channel demodulation reference signal PSCCH DMRS; a third panel specific reference signal, where the third panel specific reference signal is related to at least one of the following: the identifier of the panel that sends the panel specific reference signal, or a pseudo-random sequence initial value of a physical sidelink broadcast channel demodulation reference signal PSBCH DMRS; and a fourth panel specific reference signal, where the fourth panel specific reference signal is related to at least one of the following: the identifier of the panel that sends the panel specific reference signal, or a pseudo-random sequence initial value of a sidelink channel state information reference signal SL-CSI-RS.

In a possible design, for any panel that is of the first electronic device and that sends the panel specific reference signal, an identifier of the panel is i_{panel-ID};
the pseudo-random sequence initial value C1ᵢₙᵢₜ of the first panel specific reference signal satisfies an equation: C1ᵢₙᵢₜ = 2¹¹(i_{panel_ID} + 1) + 2⁶(i_{panei_ID} + 1); and/or
a pseudo-random sequence initial value C2ᵢₙᵢₜ of the second panel specific reference signal satisfies an equation: C2ᵢₙᵢₜ = (2^{l}C2_{init,0} + i_{panel_ID})mod 2³¹, where C2_{init,0} is the pseudo-random sequence initial value of the PSCCH DMRS, and l is related to a total quantity of panel identifiers defined in a network; and/or
a pseudo-random sequence initial value C3ᵢₙᵢₜ of the third panel specific reference signal satisfies an equation: C3ᵢₙᵢₜ = (2^{l}C3_{init,0} + i_{panel_ID})mod 2³¹, where C3_{init,0} is the pseudo-random sequence initial value of the PSBCH DMRS, and l is related to the total quantity of the panel identifiers defined in the network; and/or
a pseudo-random sequence initial value C4ᵢₙᵢₜ of the fourth panel specific reference signal satisfies an equation: C4ᵢₙᵢₜ = (2^{l}C4_{init,0} + i_{panel_ID})mod 2³¹, where C4ᵢₙᵢₜ₀ is the pseudo-random sequence initial value of the SL-CSI-RS, and l is related to the total quantity of the panel identifiers defined in the network.

In a possible design, the first indication information includes one or more pieces of panel information, and each piece of panel information includes at least one of the following: the identifier of any panel of the first electronic device and a measurement result of a reference signal corresponding to the any panel.

In a possible design, the first indication information includes one or more groups of panel information, and each group of panel information includes at least one of the following: the identifier of any panel of the first electronic device, an identifier of any panel of the second electronic device, or a measurement result of a reference signal corresponding to the group of panel information.

In a possible design, the sending module is specifically configured to: send the K panel specific reference signals to the second electronic device in a plurality of time units sequentially by using the M panels; or send the K panel specific reference signals to the second electronic device in one time unit by using the M panels.

The apparatus in this embodiment may be correspondingly configured to perform the steps performed by the first electronic device in the foregoing method embodiment. Implementation principles and technical effects thereof are similar. Details are not described herein again.

FIG. 15 is a schematic diagram of a structure of hardware of a communication apparatus according to an embodiment of this application. As shown in FIG. 15, the communication apparatus includes a memory 1501, a processor 1502, and a communication interface 1503. The memory 1501, the processor 1502, and the communication interface 1503 may communicate with each other. For example, the memory 1501, the processor 1502, and the communication interface 1503 may communicate with each other by using a communication bus 1504. The memory 1501 is configured to store a computer program, and the processor 1502 executes the computer program to implement the method shown in the foregoing method embodiment.

Optionally, the communication interface 1503 may further include a transmitter and/or a receiver.

Optionally, the processor may be a central processing unit (central processing unit, CPU), or may be another general-purpose processor, a digital signal processor (digital signal processor, DSP), an application-specific integrated circuit (application specific integrated circuit, ASIC), or the like. The general-purpose processor may be a microprocessor, or the processor may be any conventional processor, or the like. The steps of the method disclosed with reference to this application may be directly performed and completed by a hardware processor, or may be performed and completed by using a combination of hardware and software modules in the processor.

This application provides a computer-readable storage medium. The computer-readable storage medium is configured to store a computer program, and the computer program is used to implement the method shown in the foregoing method embodiment.

This application further provides a communication system, including the second electronic device in FIG. 13 and the first electronic device in FIG. 14.

This application provides a system chip. The system chip is configured to support a communication apparatus in implementing functions (for example, a second electronic device receives K panel specific reference signals from a first electronic device by using N panels, where the panel specific reference signal is related to an identifier of a panel that is of the first electronic device and that sends the panel specific reference signal, and N and K are each an integer greater than or equal to 2; and the second electronic device measures signal quality of the K panel specific reference signals) shown in embodiments of this application. The chip is specifically used in a chip system, and the chip system may include a chip, or may include a chip and another discrete component. When the chip in a first device implements the foregoing method, the chip includes a processing unit. Further, the chip may include a communication unit. The processing unit may be, for example, a processor. When the chip includes a communication unit, the communication unit may be, for example, an input/output interface, a pin, or a circuit. The processing unit performs all or some actions performed by the processing modules in embodiments of this application, and the communication unit may perform a corresponding receiving or sending action. In another specific embodiment, a processing module of a receiving device in this application may be the processing unit of the chip, and a receiving module or a sending module of a control device is the communication unit of the chip.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of any other programmable data processing device to generate a machine, so that the instructions executed by the computer or the processing unit of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units may be integrated into one unit. The integrated unit may be implemented through hardware, or may also be implemented in a form of hardware plus a software functional unit.

When the foregoing integrated unit is implemented in a form of a software functional unit, the integrated unit may be stored in a computer-readable storage medium. The software functional unit is stored in a storage medium, and contains several instructions for instructing computer equipment (for example, a personal computer, a server, or a network device) or a processor (processor) to perform some steps of the methods in embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

## Claims

1. A communication method, comprising:
receiving (S601; S703; S1102), by a second electronic device (UE1, UE2, U§3), K panel specific reference signals from a first electronic device (UE) by using N panels, wherein the panel specific reference signal is related to an identifier of a panel that is of the first electronic device (UE) and that sends the panel specific reference signal, and N and K are each an integer greater than or equal to 2; and
measuring (S602; S704; S1103), by the second electronic device (UE1, UE2, U§3), signal quality of the K panel specific reference signals;
wherein for any panel that is of the first electronic device (UE) and that sends the panel specific reference signal, an identifier of the panel is i_{panel-ID};
the pseudo-random sequence initial value C1ᵢₙᵢₜ of the first panel specific reference signal satisfies an equation: C1ᵢₙᵢₜ = 2¹¹(i_{panel_ID} + 1) + 2⁶(i_{panel_ID} + 1); and/or
a pseudo-random sequence initial value C2ᵢₙᵢₜ of the second panel specific reference signal satisfies an equation: C2ᵢₙᵢₜ = (2^{l}C2_{init,0} + i_{panel_ID})mod 2³¹, wherein C2_{init,0} is the pseudo-random sequence initial value of the PSCCH DMRS, and l is related to a total quantity of panel identifiers defined in a network; and/or
a pseudo-random sequence initial value C3ᵢₙᵢₜ of the third panel specific reference signal satisfies an equation: C3ᵢₙᵢₜ = (2^{l}C3_{init,0} + i_{panel_ID})mod 2³¹, wherein C3_{init,0} is the pseudo-random sequence initial value of the PSBCH DMRS, and l is related to the total quantity of the panel identifiers defined in the network; and/or
a pseudo-random sequence initial value C4ᵢₙᵢₜ of the fourth panel specific reference signal satisfies an equation: C4ᵢₙᵢₜ = (2^{l}C4_{init,0} + i_{panel_ID})mod 2³¹, wherein C4ᵢₙᵢₜ₀ is the pseudo-random sequence initial value of the SL-CSI-RS, and l is related to the total quantity of the panel identifiers defined in the network.

2. The method according to claim 1, further comprising:
sending (S705), by the second electronic device (UE1, UE2, U§3), first indication information to the first electronic device (UE) by using a first panel, wherein the first panel is related to the signal quality of the K panel specific reference signals, and the first indication information is indication information related to one or more panels of the first electronic device (UE).

3. The method according to claim 1, wherein the first indication information comprises one or more pieces of panel information, and each piece of panel information comprises at least one of the following: the identifier of any panel of the first electronic device (UE) and a measurement result of a reference signal corresponding to the any panel.

4. The method according to claim 1, wherein the first indication information comprises one or more groups of panel information, and each group of panel information comprises at least one of the following: the identifier of any panel of the first electronic device (UE), an identifier of any panel of the second electronic device (UE1, UE2, U§3), or a measurement result of a reference signal corresponding to the group of panel information.

5. The method according to claim 1, wherein the receiving (S601; S703; S1103), by a second electronic device (UE1, UE2, U§3), K panel specific reference signals from a first electronic device (UE) by using N panels comprises:
receiving, by the second electronic device (UE1, UE2, U§3), the K panel specific reference signals from the first electronic device (UE) in a plurality of time units by using the N panels; or
receiving, by the second electronic device (UE1, UE2, U§3), the K panel specific reference signals from the first electronic device (UE) in one time unit by using the N panels.

6. A communication method, comprising:
obtaining (S701), by a first electronic device (UE), M panel specific reference signals; and
sending (S702), by the first electronic device (UE), K panel specific reference signals to a second electronic device (UE1, UE2, U§3) by using M panels, wherein the first electronic device (UE) sends one or more panel specific reference signals on any one of the M panels, the panel specific reference signal is related to an identifier of a panel that sends the panel specific reference signal, M is an integer greater than or equal to 2, and K is an integer greater than or equal to M;
wherein for any panel that is of the first electronic device (UE) and that sends the panel specific reference signal, an identifier of the panel is i_{panel-ID};
a pseudo-random sequence initial value C1ᵢₙᵢₜ of the first panel specific reference signal satisfies an equation: C1ᵢₙᵢₜ = 2¹¹(i_{panel_ID} + 1) + 2⁶(i_{panel_ID} + 1); and/or
a pseudo-random sequence initial value C2ᵢₙᵢₜ of the second panel specific reference signal satisfies an equation: C2ᵢₙᵢₜ = (2^{l}C2_{init,0} + i_{panel_ID})mod 2³¹, wherein C2_{init,0} is the pseudo-random sequence initial value of the PSCCH DMRS, and l is related to a total quantity of panel identifiers defined in a network; and/or
a pseudo-random sequence initial value C3ᵢₙᵢₜ of the third panel specific reference signal satisfies an equation: C3ᵢₙᵢₜ = (2^{l}C3_{init,0} + i_{panel_ID})mod 2³¹, wherein C3_{init,0} is the pseudo-random sequence initial value of the PSBCH DMRS, and l is related to the total quantity of the panel identifiers defined in the network; and/or
a pseudo-random sequence initial value C4ᵢₙᵢₜ of the fourth panel specific reference signal satisfies an equation: C4ᵢₙᵢₜ = (2^{l}C4_{init,0} + i_{panel_ID})mod 2³¹, wherein C4ᵢₙᵢₜ₀ is the pseudo-random sequence initial value of the SL-CSI-RS, and l is related to the total quantity of the panel identifiers defined in the network.

7. The method according to claim 6, further comprising:
receiving (S705), by the first electronic device (UE), first indication information from the second electronic device (UE1, UE2, U§3), wherein the first indication information is indication information related to one or more panels of the first electronic device (UE).

8. The method according to claim 6, wherein the first indication information comprises one or more pieces of panel information, and each piece of panel information comprises at least one of the following:
the identifier of any panel of the first electronic device (UE) and a measurement result of a reference signal corresponding to the any panel; or the identifier of any panel of the first electronic device (UE), an identifier of any panel of the second electronic device (UE1, UE2, U§3), or a measurement result of a reference signal corresponding to the group of panel information.

9. The method according claim 6, wherein the sending (S705), by the first electronic device (UE), K panel specific reference signals to a second electronic device (UE1, UE2, U§3) by using M panels comprises:
sending, by the first electronic device (UE), the K panel specific reference signals to the second electronic device (UE1, UE2, U§3) in a plurality of time units sequentially by using the M panels; or
sending, by the first electronic device (UE), the K panel specific reference signals to the second electronic device (UE1, UE2, U§3) in one time unit by using the M panels.

10. A communication apparatus (1301, 1302; 1401, 1402), comprising a memory and a processor, wherein the processor executes program instructions in the memory, to implement the method according to any one of claims 1 to 7, or implement the method according to any one of claims 6 to 9.

11. A computer-readable storage medium, wherein the computer-readable storage medium is configured to store a computer program, and the computer program is used to implement the method according to any one of claims 1 to 5, or implement the method according to any one of claims 6 to 9.

## Patentansprüche

1. Kommunikationsverfahren, umfassend:
Empfangen (S601; S703; S1102), durch eine zweite elektronische Einrichtung (UE1, UE2, U§3), K panelspezifischer Referenzsignale von einer ersten elektronischen Einrichtung (UE) unter Verwendung von N Panels, wobei sich das panelspezifische Referenzsignal auf eine Kennung eines Panels bezieht, das der ersten elektronischen Einrichtung (UE) angehört und welches das panelspezifische Referenzsignal sendet, und N und K jeweils eine ganze Zahl größer als oder gleich 2 sind; und
Messen (S602; S704; S1103), durch die zweite elektronische Einrichtung (UE1, UE2, U§3), einer Signalqualität der K panelspezifischen Referenzsignale;
wobei für ein beliebiges Panel, das der ersten elektronischen Einrichtung (UE) angehört und welches das panelspezifische Referenzsignal sendet, eine Kennung des Panels i_{panel-ID} ist;
der pseudozufällige initiale Sequenzwert C1ᵢₙᵢₜ des ersten panelspezifischen Referenzsignals eine Gleichung: C1ᵢₙᵢₜ = 2¹¹(i_{panel_ID} + 1) + 2⁶(i_{panel_ID} + 1) erfüllt; und/oder ein pseudozufälliger initialer Sequenzwert C2ᵢₙᵢₜ des zweiten panelspezifischen Referenzsignals eine Gleichung: C2ᵢₙᵢₜ = (2^{l}C2ᵢₙᵢₜ,₀ + i_{panel_ID})mod 2³¹ erfüllt, wobei C2_{init,0} der pseudozufällige initiale Sequenzwert des PSCCH-DMRS ist und sich 1 auf eine Gesamtanzahl an Panelkennungen bezieht, die in einem Netz definiert ist; und/oder
ein pseudozufälliger initialer Sequenzwert C3ᵢₙᵢₜ des dritten panelspezifischen Referenzsignals eine Gleichung: C3ᵢₙᵢₜ = (2^{l}C3_{init,0} + i_{panel_ID})mod 2³¹ erfüllt, wobei C3_{init,0} der pseudozufällige initiale Sequenzwert des PSBCH-DMRS ist und sich 1 auf die Gesamtanzahl an Panelkennungen bezieht, die in dem Netz definiert ist; und/oder
ein pseudozufälliger initialer Sequenzwert C4ᵢₙᵢₜ des vierten panelspezifischen Referenzsignals eine Gleichung: C4ᵢₙᵢₜ = (2^{l}C4_{init,0} + i_{panel_ID})mod 2³¹ erfüllt, wobei C4ᵢₙᵢₜ₀ der pseudozufällige initiale Sequenzwert des SL-CSI-RS ist und sich 1 auf die Gesamtanzahl der Panelkennungen bezieht, die in dem Netz definiert ist.

2. Verfahren nach Anspruch 1, ferner umfassend:
Senden (S705), durch die zweite elektronische Einrichtung (UE1, UE2, U§3), erster Angabeinformationen an die erste elektronische Einrichtung (UE) unter Verwendung eines ersten Panels, wobei sich das erste Panel auf die Signalqualität der K panelspezifischen Referenzsignale bezieht und die ersten Angabeinformationen Angabeinformationen sind, die sich auf ein oder mehrere Panels der ersten elektronischen Einrichtung (UE) beziehen.

3. Verfahren nach Anspruch 1, wobei die ersten Angabeinformationen ein oder mehrere Panelinformationselemente umfassen und jedes Panelinformationselement mindestens eines von Folgendem umfasst: der Kennung eines beliebigen Panels der ersten elektronischen Einrichtung (UE) und einem Messergebnis eines Referenzsignals, das dem beliebigen Panel entspricht.

4. Verfahren nach Anspruch 1, wobei die ersten Angabeinformationen eine oder mehrere Gruppen von Panelinformationen umfassen und jede Gruppe von Panelinformationen mindestens eines von Folgendem umfasst: der Kennung eines beliebigen Panels der ersten elektronischen Einrichtung (UE), einer Kennung eines beliebigen Panels der zweiten elektronischen Einrichtung (UE1, UE2, U§3) oder einem Messergebnis eines Referenzsignals, das der Gruppe von Panelinformationen entspricht.

5. Verfahren nach Anspruch 1, wobei das Empfangen (S601; S703; S1103), durch eine zweite elektronische Einrichtung (UE1, UE2, U§3), K panelspezifischer Referenzsignale von einer ersten elektronischen Einrichtung (UE) unter Verwendung von N Panels Folgendes umfasst:
Empfangen, durch die zweite elektronische Einrichtung (UE1, UE2, U§3), der K panelspezifischen Referenzsignale von der ersten elektronischen Einrichtung (UE) in einer Vielzahl von Zeiteinheiten unter Verwendung der N Panels; oder
Empfangen, durch die zweite elektronische Einrichtung (UE1, UE2, U§3), der K panelspezifischen Referenzsignale von der ersten elektronischen Einrichtung (UE) in einer Zeiteinheit unter Verwendung der N Panels.

6. Kommunikationsverfahren, umfassend:
Erlangen (S701), durch eine erste elektronische Einrichtung (UE), M panelspezifischer Referenzsignale; und
Senden (S702), durch die erste elektronische Einrichtung (UE), K panelspezifischer Referenzsignale an eine zweite elektronische Einrichtung (UE1, UE2, U§3) unter Verwendung von M Panels, wobei die erste elektronische Einrichtung (UE) ein oder mehrere panelspezifische Referenzsignale auf einem der M Panels sendet, sich das panelspezifische Referenzsignal auf eine Kennung eines Panels bezieht, welches das panelspezifische Referenzsignal sendet, M eine ganze Zahl größer als oder gleich 2 ist und K eine ganze Zahl größer als oder gleich M ist;
wobei für ein beliebiges Panel, das der ersten elektronischen Einrichtung (UE) angehört und welches das panelspezifische Referenzsignal sendet, eine Kennung des Panels i_{panel-ID} ist;
ein pseudozufälliger initialer Sequenzwert C1ᵢₙᵢₜ des ersten panelspezifischen Referenzsignals eine Gleichung: C1ᵢₙᵢₜ = 2¹¹(i_{panel_ID} + 1) + 2⁶(i_{panel_ID} + 1) erfüllt; und/oder
ein pseudozufälliger initialer Sequenzwert C2ᵢₙᵢₜ des zweiten panelspezifischen Referenzsignals eine Gleichung: C2ᵢₙᵢₜ = (2^{l}C2_{init,0} + i_{panel_ID})mod 2³¹ erfüllt, wobei C2_{init,0} der pseudozufällige initiale Sequenzwert des PSCCH-DMRS ist und sich 1 auf eine Gesamtanzahl an Panelkennungen bezieht, die in einem Netz definiert ist; und/oder
ein pseudozufälliger initialer Sequenzwert C3ᵢₙᵢₜ des dritten panelspezifischen Referenzsignals eine Gleichung: C3ᵢₙᵢₜ = (2^{l}C3_{init,0} + i_{panel_ID})mod 2³¹ erfüllt, wobei C3_{init,0} der pseudozufällige initiale Sequenzwert des PSBCH-DMRS ist und sich 1 auf die Gesamtanzahl an Panelkennungen bezieht, die in dem Netz definiert ist; und/oder
ein pseudozufälliger initialer Sequenzwert C4ᵢₙᵢₜ des vierten panelspezifischen Referenzsignals eine Gleichung: C4ᵢₙᵢₜ = (2^{l}C4_{init,0} + i_{panel_ID})mod 2³¹ erfüllt, wobei C4ᵢₙᵢₜ₀ der pseudozufällige initiale Sequenzwert des SL-CSI-RS ist und sich 1 auf die Gesamtanzahl der Panelkennungen bezieht, die in dem Netz definiert ist.

7. Verfahren nach Anspruch 6, ferner umfassend:
Empfangen (S705), durch die erste elektronische Einrichtung (UE), erster Angabeinformationen von der zweiten elektronischen Einrichtung (UE1, UE2, U§3), wobei die ersten Angabeinformationen Angabeinformationen sind, die sich auf ein oder mehrere Panels der ersten elektronischen Einrichtung (UE) beziehen.

8. Verfahren nach Anspruch 6, wobei die ersten Angabeinformationen ein oder mehrere Panelinformationselemente umfassen und jedes Panelinformationselement mindestens eines von Folgendem umfasst:
der Kennung eines beliebigen Panels der ersten elektronischen Einrichtung (UE) und einem Messergebnis eines Referenzsignals, das dem beliebigen Panel entspricht; oder der Kennung eines beliebigen Panels der ersten elektronischen Einrichtung (UE), einer Kennung eines beliebigen Panels der zweiten elektronischen Einrichtung (UE1, UE2, U§3) oder einem Messergebnis eines Referenzsignals, das der Gruppe von Panelinformationen entspricht.

9. Verfahren nach Anspruch 6, wobei das Senden (S705), durch die erste elektronische Einrichtung (UE), K panelspezifischer Referenzsignale an eine zweite elektronische Einrichtung (UE1, UE2, U§3) unter Verwendung von M Panels Folgendes umfasst:
sequenzielles Senden, durch die erste elektronische Einrichtung (UE), der K panelspezifischen Referenzsignale an die zweite elektronische Einrichtung (UE1, UE2, U§3) in einer Vielzahl von Zeiteinheiten unter Verwendung der M Panels; oder
Senden, durch die erste elektronische Einrichtung (UE), der K panelspezifischen Referenzsignale an die zweite elektronische Einrichtung (UE1, UE2, U§3) in einer Zeiteinheit unter Verwendung der M Panels.

10. Kommunikationsvorrichtung (1301, 1302; 1401, 1402), umfassend einen Speicher und einen Prozessor, wobei der Prozessor Programmanweisungen in dem Speicher ausführt, um das Verfahren nach einem der Ansprüche 1 bis 7 umzusetzen oder das Verfahren nach einem der Ansprüche 6 bis 9 umzusetzen.

11. Computerlesbares Speichermedium, wobei das computerlesbare Speichermedium dazu konfiguriert ist, ein Computerprogramm zu speichern, und das Computerprogramm dazu verwendet wird, das Verfahren nach einem der Ansprüche 1 bis 5 umzusetzen oder das Verfahren nach einem der Ansprüche 6 bis 9 umzusetzen.

## Revendications

1. Procédé de communication, comprenant :
la réception (S601 ; S703 ; S1102), par un second dispositif électronique (UE1, UE2, U§3), de K signaux de référence spécifiques au panneau provenant d'un premier dispositif électronique (UE) à l'aide de N panneaux, dans lequel le signal de référence spécifique à un panneau est lié à un identifiant d'un panneau du premier dispositif électronique (UE) et qui envoie le signal de référence spécifique au panneau, et N et K sont chacun un entier supérieur ou égal à 2 ; et
la mesure (S602 ; S704 ; S1103), par le second dispositif électronique (UE1, UE2, U§3), de la qualité de signal des K signaux de référence spécifiques au panneau ;
dans lequel pour un quelconque panneau qui est du premier dispositif électronique (UE) et qui envoie le signal de référence spécifique au panneau, un identifiant du panneau est i_{panel_ID} ;
la valeur initiale de séquence pseudo-aléatoire C1ᵢₙᵢₜ du premier signal de référence spécifique au panneau satisfait une équation : C1ᵢₙᵢₜ = 2¹¹(i_{panel_ID} + 1) + 2⁶(i_{panel_ID} + 1) ; et/ou une valeur initiale de séquence pseudo-aléatoire C2ᵢₙᵢₜ du deuxième signal de référence spécifique au panneau satisfait une équation : C2ᵢₙᵢₜ = (2^{l}C2_{init,0} + i_{panel_ID})mod 2³¹, dans lequel C2_{init,0} est la valeur initiale de séquence pseudo-aléatoire du PSCCH DMRS, et 1 est lié à la quantité totale d'identifiants de panneau définis dans un réseau ; et/ou
une valeur initiale de séquence pseudo-aléatoire C3ᵢₙᵢₜ du troisième signal de référence spécifique au panneau satisfait une équation : C3ᵢₙᵢₜ = (2^{l}C3_{init,0} + i_{panel_ID})mod 2³¹, dans lequel C3_{init,0} est la valeur initiale de séquence pseudo-aléatoire du PSBCH DMRS, et 1 est lié à la quantité totale d'identifiants de panneau définis dans le réseau ; et/ou
une valeur initiale de séquence pseudo-aléatoire C4ᵢₙᵢₜ du quatrième signal de référence spécifique au panneau satisfait une équation : C4ᵢₙᵢₜ = (2^{l}C4_{init,0} + i_{panel_ID})mod 2³¹, dans lequel C4ᵢₙᵢₜ₀ est la valeur initiale de séquence pseudo-aléatoire du SL-CSI-RS, et l est lié à la quantité totale d'identifiants de panneau définis dans le réseau.

2. Procédé selon la revendication 1, comprenant en outre :
l'envoi (S705), par le second dispositif électronique (UE1, UE2, U§3), de premières informations d'indication au premier dispositif électronique (UE) à l'aide d'un premier panneau, dans lequel le premier panneau est lié à la qualité du signal des K signaux de référence spécifiques du panneau, et les premières informations d'indication sont des informations d'indication liées à un ou plusieurs panneaux du premier dispositif électronique (UE).

3. Procédé selon la revendication 1, dans lequel les premières informations d'indication comprennent une ou plusieurs informations de panneau, et chaque information de panneau comprend au moins l'un des éléments suivants : l'identifiant d'un quelconque panneau du premier dispositif électronique (UE) et un résultat de mesure d'un signal de référence correspondant à l'un quelconque panneau.

4. Procédé selon la revendication 1, dans lequel les premières informations d'indication comprennent un ou plusieurs groupes d'informations de panneau, et chaque groupe d'informations de panneau comprend au moins l'un des éléments suivants : l'identifiant d'un quelconque panneau du premier dispositif électronique (UE), un identifiant d'un quelconque panneau du second dispositif électronique (UE1, UE2, U§3), ou un résultat de mesure d'un signal de référence correspondant au groupe d'informations de panneau.

5. Procédé selon la revendication 1, dans lequel la réception (S601 ; S703 ; S1103), par un second dispositif électronique (UE1, UE2, U§3), de K signaux de référence spécifiques à un panneau provenant d'un premier dispositif électronique (UE) à l'aide de N panneaux, comprend :
la réception, par le second dispositif électronique (UE1, UE2, U§3), de K signaux de référence spécifiques au panneau provenant du premier dispositif électronique (UE) dans une pluralité d'unités de temps à l'aide des N panneaux ; ou
la réception, par le second dispositif électronique (UE1, UE2, U§3), de K signaux de référence spécifiques au panneau provenant du premier dispositif électronique (UE) dans une unité de temps à l'aide des N panneaux.

6. Procédé de communication, comprenant :
l'obtention (S701), par un premier dispositif électronique (UE), de M signaux de référence spécifiques au panneau ; et
l'envoi (S702), par le premier dispositif électronique (UE), de K signaux de référence spécifiques au panneau à un second dispositif électronique (UE1, UE2, U§3) à l'aide de M panneaux, dans lequel le premier dispositif électronique (UE) envoie un ou plusieurs signaux de référence spécifiques au panneau sur l'un des M panneaux, le signal de référence spécifique au panneau est lié à un identifiant d'un panneau qui envoie le signal de référence spécifique au panneau, M est un entier supérieur ou égal à 2, et K est un entier supérieur ou égal à M ;
dans lequel pour un quelconque panneau qui est du premier dispositif électronique (UE) et qui envoie le signal de référence spécifique au panneau, un identifiant du panneau est i_{panel_ID} ;
une valeur initiale pseudo-aléatoire C1ᵢₙᵢₜ du premier signal de référence spécifique au panneau satisfait une équation : C1ᵢₙᵢₜ = 2¹¹(i_{panel_ID} + 1) + 2⁶(i_{panel_ID} + 1) ; et/ou
**une valeur** initiale de séquence pseudo-aléatoire C2ᵢₙᵢₜ du deuxième signal de référence spécifique au panneau satisfait une équation : C2ᵢₙᵢₜ = (2^{l}C2_{init,0} + i_{panel_ID})mod 2³¹, dans lequel C2_{init,0} est la valeur initiale de séquence pseudo-aléatoire du PSCCH DMRS, et 1 est lié à la quantité totale d'identifiants de panneau définis dans un réseau ; et/ou
une valeur initiale de séquence pseudo-aléatoire C3ᵢₙᵢₜ du troisième signal de référence spécifique au panneau satisfait une équation : C3ᵢₙᵢₜ = (2^{l}C3_{init,0} + i_{panel_ID})mod 2³¹, dans lequel C3_{init,0} est la valeur initiale de séquence pseudo-aléatoire du PSBCH DMRS, et 1 est lié à la quantité totale d'identifiants de panneau définis dans le réseau ; et/ou
une valeur initiale de séquence pseudo-aléatoire C4ᵢₙᵢₜ du quatrième signal de référence spécifique au panneau satisfait une équation : C4ᵢₙᵢₜ = (2^{l}C4_{init,0} + i_{panel_ID})mod 2³¹, dans lequel C4ᵢₙᵢₜ₀ est la valeur initiale de séquence pseudo-aléatoire du SL-CSI-RS, et 1 est lié à la quantité totale d'identifiants de panneau définis dans le réseau.

7. Procédé selon la revendication 6, comprenant en outre :
la réception (S705), par le premier dispositif électronique (UE), de premières informations d'indication provenant du second dispositif électronique (UE1, UE2, U§3), dans lequel les premières informations d'indication sont des informations d'indication liées à un ou plusieurs panneaux du premier dispositif électronique (UE).

8. Procédé selon la revendication 6, dans lequel les premières informations d'indication comprennent une ou plusieurs informations de panneau, et chaque information de panneau comprend au moins l'un des éléments suivants :
l'identifiant d'un quelconque panneau du premier dispositif électronique (UE) et un résultat de mesure d'un signal de référence correspondant à l'un quelconque panneau ; ou l'identifiant d'un quelconque panneau du premier dispositif électronique (UE), un identifiant d'un quelconque panneau du second dispositif électronique (UE1, UE2, U§3), ou un résultat de mesure d'un signal de référence correspondant au groupe d'informations de panneau.

9. Procédé selon la revendication 6, dans lequel l'envoi (S705), par le premier dispositif électronique (UE), de K signaux de référence spécifiques à un panneau à un second dispositif électronique (UE1, UE2, U§3) à l'aide de M panneaux comprend :
l'envoi, par le premier dispositif électronique (UE), de K signaux de référence spécifiques au panneau au second dispositif électronique (UE1, UE2, U§3) dans une pluralité d'unités de temps à l'aide séquentiellement des M panneaux ; ou
l'envoi, par le premier dispositif électronique (UE), de K signaux de référence spécifiques au panneau au second dispositif électronique (UE1, UE2, U§3) dans une unité de temps à l'aide des M panneaux.

10. Appareil de communication (1301, 1302 ; 1401, 1402), comprenant une mémoire et un processeur, dans lequel le processeur exécute des instructions de programme dans la mémoire, pour mettre en œuvre le procédé selon l'une quelconque des revendications 1 à 7, ou mettre en œuvre le procédé selon l'une quelconque des revendications 6 à 9.

11. Support de stockage lisible par ordinateur, dans lequel le support de stockage lisible par ordinateur est configuré pour stocker un programme informatique, et le programme informatique est utilisé pour mettre en œuvre le procédé selon l'une quelconque des revendications 1 à 5, ou mettre en œuvre le procédé selon l'une quelconque des revendications 6 à 9.
